# EUROPEAN PATENT APPLICATION

(11) **EP 1 813 968 A1**
(43) Date of publication of application: **01.08.2007**
(21) Application number: 07250082.0
(22) Date of filing: 10.01.2007
(51) Int. Cl.: G02B 3/00, G02B 5/18, G02B 1/04, G11B 7/135

(54) **Optical element**

(30) Priority: 31.01.2006 JP 2006022652
(71) Applicant: Konica Minolta Opto, Inc., Hachioji-shi, Tokyo 192-8505 (JP)
(72) Inventor: Watanabe, Daisuke, Hachioji-shi Tokyo 192-8505 (JP); Murakami, Shuji, Hachioji-shi Tokyo 192-8505 (JP)
(74) Representative: Roberts, Mark Peter

(57) **Abstract**

Disclosed is an optical element that has high quality with respect to heat resistance and light resistance, as well as high quality with respect to light transmittance. The optical element includes a thermosetting resin and fine particles, and difference between refractive index of the thermosetting resin n1 and refractive index of the fine particles n2, |n1- n2| satisfies a condition of 0 ≤ |n1 - n2| ≤ 0.1.

## Description

### BACKGROUND OF THE INVENTION

### Field of the Invention

The present invention relates to an optical element, and more particularly to an optical element that is preferably used as a lens for an optical pickup apparatus.

### Description of Related Art

Conventionally, glass lens and plastic lens are used as an optical element for an optical pickup apparatus. Examples of the optical elements are objective lens, collimator lens, and the like. In particular, plastic lens can be easily molded, and thus has an advantage over glass lens with respect to manufacturing cost. Therefore, plastic lens is used widely for optical element. As for plastic optical element for optical pickup apparatus, thermoplastic resin is generally used. However, thermoplastic resin is easily deformed under heat, and thus has a problem that it is low-quality with respect to "heat resistance". Recently in particular, optical pickup apparatus that uses blue-violet laser, which has a higher recording density than that of the conventional CD and DVD, has been developed. Therefore, there are cases where even a minimal deformation by heat, which caused no problem when recording/reproducing CD and DVD, effects performance largely, and thus regarded as a problem.

Therefore, the inventors have been conducting research and development activities to solve the problem with respect to heat resistance, by using a thermosetting resin in place of a thermoplastic resin.

However, as a result of the research activity, it became apparent that with respect to the lens which is structured with thermosetting resin, in a case where the lens receives irradiation of blue-violet ray and the like with short wavelength for a long time, aberration variation occurs to the optical element. Therefore, performance is degraded, and thus the lens structured with thermosetting resin is low-quality with respect to "light resistance". It is assumed that this performance degradation due to aberration variation is caused since molecules move actively in the gap between molecular chains of the thermal cured resin, by being irradiated with laser.

As a result of further research activities by the inventors, it became apparent that by adding fine particles to the thermosetting resin that structures the optical element, where the optical element uses the thermosetting resin, gap between molecular chains of the thermosetting resin can be filled, and thus resin structure that is low in mobility can be made. As a result, while having heat resistant property, aberration variation due to absorption of light energy can be suppressed (light resistance is improved).

On the other hand, with respect to a lens structured with thermoplastic resin, a technique to add fine particles to thermoplastic resin is known. For example, to a thermoplastic resin as base material having a certain value of dn/dt, which represents a change in refractive index with respect to a change in temperature, fine particles having a value of dn/dt with negative sign is added. As a result, the change in refractive index with respect to the change in temperature of the thermoplastic resin added with fine particles can be suppressed (For example, refer to Japanese Patent Application (Laid-open) No. 2002-241612.) That is, this technique cancels a property of a resin (such as dn/dt and the like) by adding fine particles with a characteristic that cancels the property of the resin. However, there is no disclosure with respect to a technique to enhance structural stability and thus improve stability against heat, by adding fine particles.

As described above, as a result of the research activities by the inventors, it became apparent that heat resistance and light resistance can be achieved at the same time by adding fine particles to the thermosetting resin. It also became apparent that mere addition of fine particles to the thermosetting resin can solve the afore-mentioned problems, however, refraction of light occurs in between the resin and the fine particles, and the light is scattered. As a result, there is a case where degradation of "light transmittance" of optical element including fine particles occurs.

### SUMMARY OF THE INVENTION

Therefore, an object of the present invention is to provide an optical element that has high quality with respect to heat resistance and light resistance, as well as light transmittance.

According to an aspect of the present invention, there is provided an optical element, comprising:
a thermosetting resin; and
fine particles, wherein
difference between refractive index of the thermosetting resin n1 and refractive index of the fine particles n2, |n1 - n2| satisfies a condition of 0 ≤ |n1 - n2| ≤ 0.1.

The difference between the refractive index of the thermosetting resin n1 and the refractive index of the fine particles n2, |n1 - n2| may satisfy a condition of |n1 - n2| = 0.

Preferably, the fine particles are inorganic oxide.

Preferably, mean particle diameter of the fine particles is approximately 1 - 100 nm.

Preferably, the thermosetting resin is a resin selected from the group consisting of silicone resin, allyl ester resin, acrylate resin, and epoxy resin.

More preferably, the thermosetting resin is silicon resin. Still more preferably, the silicone resin is represented by the following general formula (1),

((R₁) (R₂)SiO₂)ₘ (1)

wherein in the aforementioned general formula (1), R₁ and R₂ indicate the same or different mono-valent hydrocarbon groups, the mono-valent hydrocarbon groups being substituted or non-substituted, and m indicates and integer number of 50 or larger.

### BREIF DESCRIPTION OF THE DRAWINGS

The present invention will become more fully understood from the detailed description given hereinafter and the accompanying drawings which are given by way of illustration only, and thus are not intended as a definition of the limits of the scope of the invention, and wherein:
FIG. 1 is a plan view showing a schematic structure of an optical pickup device;
FIG. 2 is a plan view showing an optical surface of an object lens;
FIGS. 3A and 3B are longitudinal sectional views showing a precise structure;
FIGS. 4A and 4B are longitudinal sectional views showing a precise structure; and
FIGS. 5A and 5B are longitudinal sectional views showing a precise structure.

### DETAILED DESCRIPTION OF THE PREFERRED EMBODIMENTS

Hereinafter, detailed description of the preferred embodiment of the present invention will be described with reference to drawings. However, although the embodiments are provided with various limitations that are preferable to execute the present invention, the scope of the invention is not limited to the example given in the embodiments and drawings.

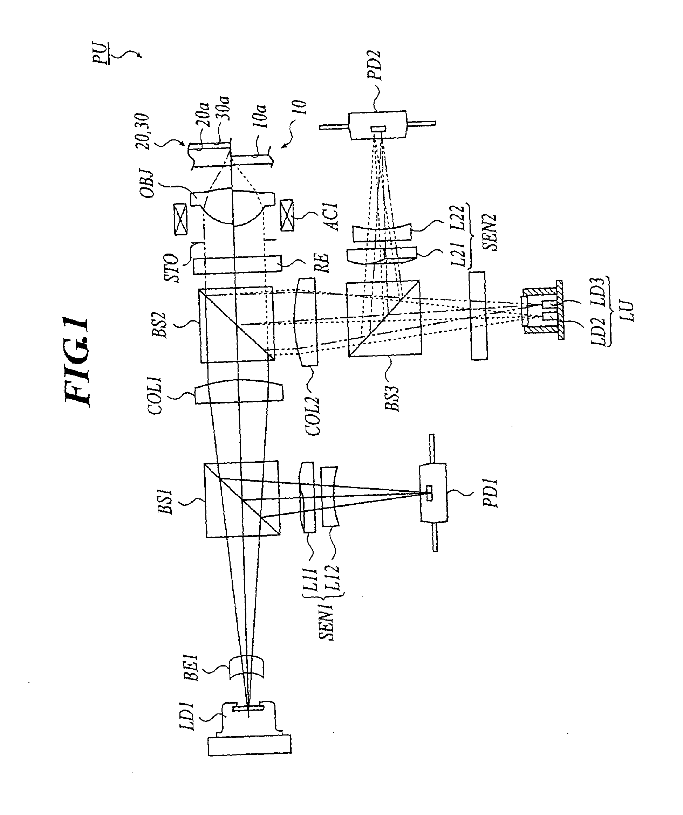

FIG. 1 is a plan view showing a schematic structure of an optical pickup device PU.

As shown in the figure, the optical pickup device PU is provided with three types of semiconductor laser oscillators LD1, LD2, and LD3, as light sources.

The semiconductor laser oscillator LD1 emits beam of light with a particular wavelength within 350nm - 450nm (for example, 405nm and 407nm), when recording/reproducing of information is conducted with BD 10 as a recording medium. Here, in the present embodiment, thickness of a protective layer of the BD 10 is 0.6mm.

The semiconductor laser oscillator LD2 emits beam of light with a particular wavelength within 620nm - 680nm (for example, 655nm), when recording/reproducing of information is conducted with DVD 20 as a recording medium. The semiconductor laser oscillator LD2 structures a light source unit LU in combination with the semiconductor laser oscillator LD3. Here, in the present embodiment, thickness of a protective layer of the DVD 20 is 0.6mm. Further, in the present embodiment, DVD is a generic term for optical information recording medium of DVD type, such as DVD-ROM, DVD-Video, DVD-Audio, DVD-RAM, DVD-R, DVD-RW, DVD+R, DVD+RW, and the like.

The semiconductor laser oscillator LD3 emits beam of light with a particular wavelength within 750nm - 810nm (for example, 785nm), when recording/reproducing of information is conducted with CD 30 as a recording medium. Here, in the present embodiment, thickness of a protective layer of the CD 30 is 1.2mm. Further, in the present embodiment, CD is a generic term for optical information recording medium of CD type, such as CD-ROM, CD-Audio, CD-Video, CD-R, CD-RW, and the like.

In the direction of an optical axis of the light beam that is emitted from the semiconductor laser oscillator LD1, a beam shaper BE1, a beam splitter BS1, a collimator lens COL1, a beam splitter BS2, a ¼ wavelength plate RE, a diaphragm STO, and an objective lens OBJ are arranged in this order from lower side to upper side in FIG. 1. A two-dimensional actuator AC1, which moves the objective lens OBJ in up and down direction with respect to FIG. 1, is provided to the objective lens OBJ. BD 10, DVD 20, or CD 30 as the optical information recording medium is arranged to a position that opposes the objective lens OBJ.

With respect to the beam splitter BS1, a sensor lens SEN1 and a light detector PD1 are arranged in this order in right side of FIG. 1. The sensor lens SEN1 is provided with a cylindrical lens L11 and a concave lens L12.

In the direction of an optical axis of the light beam that is emitted from the semiconductor laser oscillator LD2 and LD3, a beam splitter BS3, a collimator lens COL2, and a beam splitter BS2 are arranged in this order from right side to left side in FIG. 1. With respect to the beam splitter BS3, a sensor lens SEN 2 and a light detector PD2 are arranged in this order in upper side of FIG. 1. The sensor lens SEN2 is provided with a cylindrical lens L21 and a concave lens L22.

Next, operation and effect of the optical pick up device PU is described in brief.

In a case where information is recorded on the BD 10 or in a case where information recorded on the BD 10 is reproduced, the semiconductor laser oscillator LD1 emitts beam of light. This beam of light, as its light path is shown by a solid line in FIG. 1, first transmits the beam shaper BE1 and is shaped. Subsequently, the beam of light transmits the beam splitter BS1, and then is converted into a collimated light by the collimator lens COL1. Next, the beam of light transmits through the beam splitter BS2 and the ¼ wavelength plate RE, and is then narrowed down by the diaphragm STO. Subsequently, the beam of light is concentrated by the objective lens OBJ, and forms a concentrated light spot on an information recording surface 20a of the BD 10. At this time, the objective lens OBJ conducts focusing and tracking by the two-dimensional actuator AC1 that is arranged in its vicinity.

The light that formed the concentrated light spot is then modulated by an information pit at the information recording surface 10a of the BD 10, and is reflected. Subsequently, this reflected light transmits through the objective lens OBJ, the ¼ wavelength plate RE, the beam splitter BS2, and the collimator lens COL1, and is reflected at the beam splitter BS1. Then, the reflected light is provided with astigmatism by the sensor lens SEN1, and reaches the light detector PD1. By using output signal of the light detector PD1, information recorded on the BD 10 is reproduced.

In a case where information is recorded on the DVD 20 or in a case where information recorded on the DVD 20 is reproduced, the semiconductor laser oscillator LD2 emits light. This beam of light, as its light path is shown by a dashed line in FIG. 1, first transmits the beam splitter BS3, and is converted into a collimated light by the collimator lens COL2. Subsequently, the beam of light is reflected by the beam splitter BS2, transmits the ¼ wavelength plate RE, and is narrowed down by the diaphragm STO. Then, the beam of light is concentrated by the objective lens OBJ and forms a concentrated light spot on an information recording surface 20a of the DVD 20. At this time, the objective lens OBJ conducts focusing and tracking by the two-dimensional actuator AC1 that is arranged in its vicinity.

The light that formed the concentrated light spot is then modulated by an information pit at the information recording surface 20a of the DVD 20, and is reflected. Subsequently, this reflected light transmits through the objective lens OBJ and the ¼ wavelength plate RE, and is reflected at the beam splitters BS2 and BS3. Then, the reflected light is provided with astigmatism by the sensor lens SEN2, and reaches the light detector PD2. By using output signal of the light detector PD2, information recorded on the DVD 20 is reproduced.

In a case where information is recorded on the CD 30 or in a case where information on the CD 30 is reproduced, the semiconductor laser oscillator LD3 emits light. This beam of light, as its light path is shown by a dashed two-dotted line in FIG. 1, first transmits through the beam splitter BS3, and is converted into a collimated light by the collimator lens COL2. Subsequently, the beam of light is reflected by the beam splitter BS2, transmits through the ¼, wavelength plate RE, and is narrowed down by the diaphragm STO. Then, the beam of light is concentrated by the objective lens OBJ and forms a concentrated light spot on an information recording surface 30a of the CD 30. At this time, the objective lens OBJ conducts focusing and tracking by the two-dimensional actuator AC1 that is arranged in its vicinity.

The light that formed the concentrated light spot is then modulated by an information pit at the information recording surface 30a of the CD 30, and is reflected. Subsequently, this reflected light transmits through the objective lens OBJ and the ¼ wavelength plate RE, and is reflected at the beam splitters BS2 and BS3. Then, the reflected light is provided with astigmatism by the sensor lens SEN2, and reaches the light detector PD2. By using output signal of the light detector PD2, information recorded on the CD 30 is reproduced.

Next, structure of the objective lens OBJ is given in detail.

The objective lens OBJ is the optical element according to the present invention, and has a function to concentrate beam of light, which are emitted from each of the semiconductor laser oscillators LD1, LD2, and LD3, to the information recording surfaces 10a, 20a, and 30a of the BD 10, the DVD 20, and the CD 30. This objective lens OBJ is a single lens, and two optical surfaces are both aspherical. Numeric aperture NA of the objective lens OBJ is 0.85 with respect to beam of light that is emitted from the semiconductor laser oscillators LD1 and LD2, and is 0.45 - 0.51 with respect to beam of light that is emitted from the semiconductor laser oscillator LD3. Further, refractive index of the objective lens OBJ is 1.55.

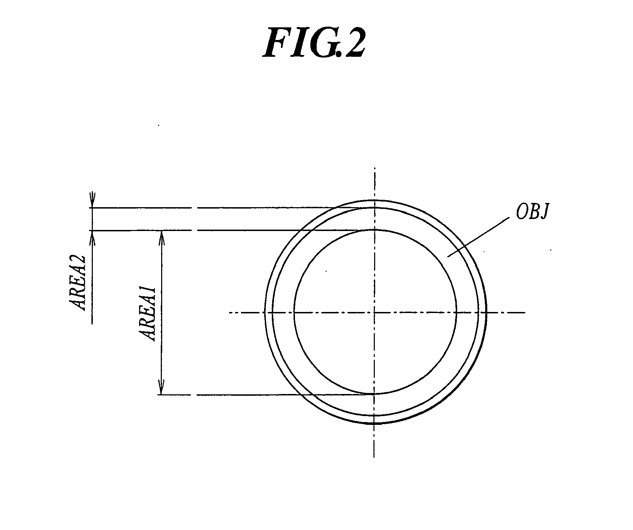

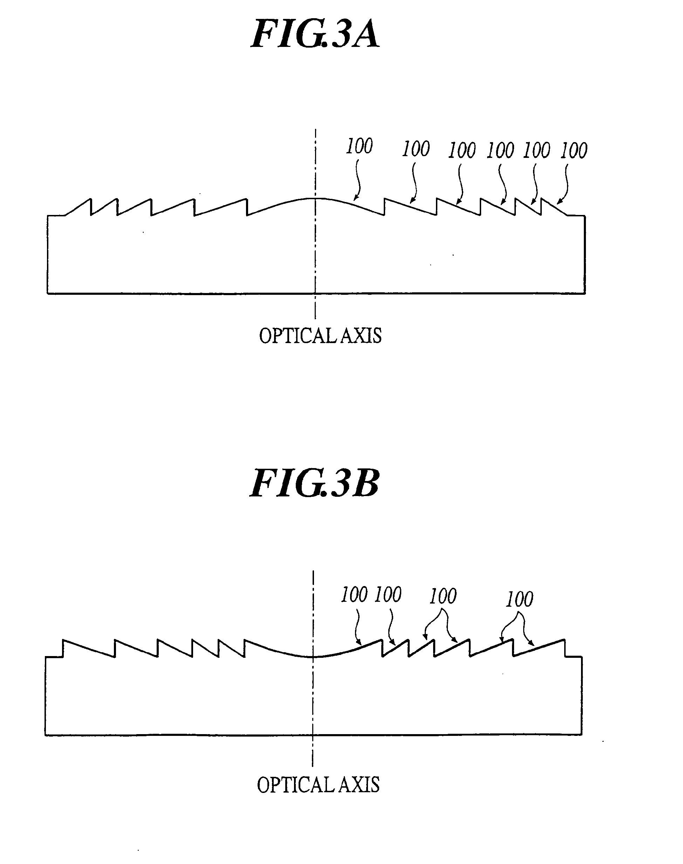

With respect to the two optical surfaces of the objective lens, as shown in FIG. 2, at least the optical surface in the light source side is divided into a first region AREA1 and a second region AREA2. The first region AREA1 is a region where beam of light that is emitted from the semiconductor laser oscillators LD1, LD2, and LD3 transmit through. The second region AREA2 is a region where beam of light that is emitted from the semiconductor laser oscillators LD1, and LD2 transmit through. Here, the second region AREA2 may be further divided into a region where beam of light that is emitted from the semiconductor laser oscillators LD1 and LD2 transmit through, and a region where only beam of light that is irradiated from the semiconductor laser oscillator LD2 transmit through. As shown in FIG. 3A or FIG. 3B, a diffractive structure as a phase structure is provided to the first region AREA1.

By generating optical path difference, this diffractive structure concentrates each beam of light from the semiconductor laser oscillators LD1, LD2, and LD3, to the information recording surfaces 10a, 20a, and 30a of corresponding optical information recording medium, respectively. As for the shape of such diffractive structure, a conventionally known shape can be used. The diffractive structure according to the present embodiment is structured with a plurality of orbicular zones 100, the center of the plurality of orbicular zones 100 being the optical axis. Cross-sectional shape including the optical axis is saw teeth shape.

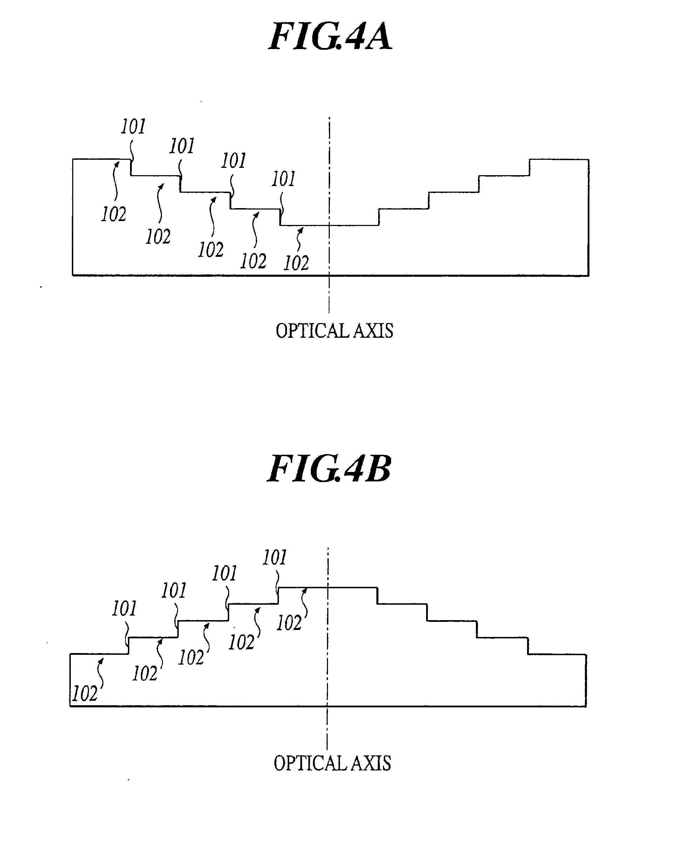

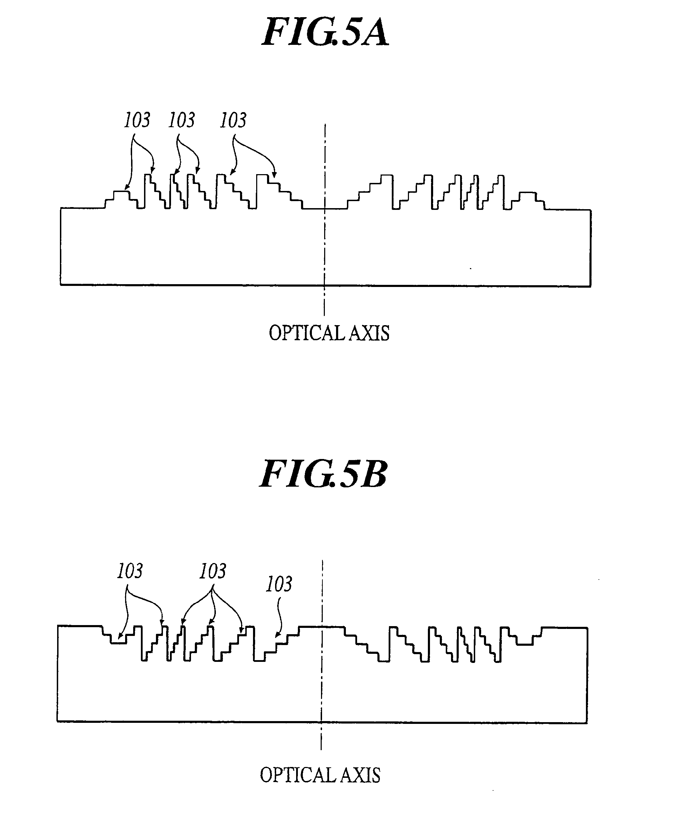

Here, as shown in FIGS. 4A, 4B, 5A, and 5B, the diffractive structure may have other shapes. The diffractive structure shown in FIGS. 4A and 4B are structured with a plurality of orbicular zones 102, where the direction of steps 101 within the effective diameter is the same. Cross-sectional shape including the optical axis is stair shape. In addition, the diffractive structure shown in FIGS. 5A and 5B are structured with a plurality of orbicular zones 103, where stair structure is formed in its internal. Here, FIGS. 4A, 4B, 5A, and 5B schematically show cases where each of the fine structures are formed on a planar surface, however, each of the fine structures may also be formed on a spherical surface, or on an aspherical surface.

The aforementioned objective lens OBJ is formed by injection molding for example, in a state where the thermosetting resin and the fine particles are dispersed.

Further, with respect to the objective lens OBJ, difference in refractive index of the aforementioned thermosetting resin n1 and refractive index of the aforementioned fine particles n2, |n1 - n2|, satisfies the condition of 0 ≤ |n1 - n2| ≤ 0.1.

Hereinafter, description on (1) thermosetting resin and (2) fine particles will be given.

### (1) Thermosetting Resin

The thermosetting resin is not limited, so long as it forms a three dimensional network structure by polymerization reaction with heating. In general, the thermosetting resin shows curing property by application of high temperature for a long time. Once the thermosetting resin is cured, it becomes resistant to re-softening even when heat is applied.

### (1.1) Silicone Resin

It is preferable that the silicone resin is a poly organosiloxane resin that includes following general formula (1) as a composition unit, in particular. Configuration of the silicone resin may be a chain structure, a ring structure, or a network structure.

((R₁) (R₂) SiO₂)ₘ (1)

In the aforementioned general formula (1), R₁ and R₂ indicate the same or a different, substituted or non-substituted hydrocarbon groups. In particular, as for the R₁ and R₂, alkyl groups such as methyl group, ethyl group, propyl group, butyl group, and the like, alkenyl groups such as vinyl group, allyl group, and the like, aryl groups such as phenyl group, tolyl group, and the like, cycloalkyl groups such as cyclohexyl group, cyclooctyl group, and the like, or groups that have hydrogen atom which is bonded to carbon atom of these groups substituted by halogen atom, cyano group, and amino group, and the like, such as chloro methyl group, 3,3,3-trifluoro propyl group, cyano methyl group, γ-amino propyl group, N-(β-amino ethyl)-γ-amino propyl group, can be mentioned for example. The R₁ and R₂ may be a group chosen from hydroxyl group and alkoxy group. Further, in the aforementioned general formula (1), "m" indicates an integer number of 50 or larger.

The aforementioned poly organosiloxane resin is used generally by dissolving it in a hydrocarbon solvent such as toluene, xylene, petroleum solvent, and the like; or a mixture of these with polar solvent. Further, solvent with different composition may be combined so long as it dissolves with each other.

Manufacturing method of the aforementioned poly organosiloxane resin is not limited, and any known method can be used. For example, poly organosiloxane resin may be obtained by hydrolysis or alcolysis of one type of organohalogen silane or a mixture of two or more types of organohalogen silane. Poly organosiloxane resin generally includes hydrolyzing group such as silanol group or alkoxy group, and includes these groups by 1 - 10 % by silanol group equivalent.

These reactions are generally conducted under presence of solvent that is capable to dissolve organohalogen silane. In addition, the aforementioned poly organosiloxane resin can also be obtained by co-hydrolysis of linear poly organosiloxane that has a hydroxyl group, an alkoxy group, or a halogen atom at its terminal, with organo trichloro silane, thus to obtain a block copolymer. The poly organosiloxane resin obtained as such contains HCl, however, since its shelf stability is high, it is preferable to use the ones that contains HCL for 10 ppm or less, more preferably 1 ppm or less.

### (1.2) Allyl Ester Resin

The allyl ester resin is a thermosetting resin that is curable by heating oligomers, which have a structure including following general formula (2) at the end of molecular chain, to go under radical polymerization reaction. Configuration of the allyl ester resin may be a chain structure, a ring structure, or a network structure.

R₁ - COO - CH₂ - CH = CH₂ (2)

In the aforementioned general formula (2), R₁ indicates a mono-valent organic bonding group, and is not limited so long as the allyl ester group can react and cure by heat. In addition, substance with different composition may be combined to the allyl ester resin, so long as it dissolves with each other. Manufacturing method is also not limited, and any known method can be chosen arbitrarily. For example, a manufacturing method disclosed in Japanese Patent Application (Laid-open) Tokukaihei 5-194324 can be mentioned. In particular, a method that obtains allyl ester oligomer by addition of catalyst to a mixture of methyl ester of poly-valent carboxylic acid, polyol, and allyl alcohol, and then forms allyl ester resin by addition of radical initiator to the allyl ester oligomer can be mentioned.

### (1.3) Acrylate Resin

The acrylate resin is a thermosetting resin that is curable by heating oligomers, which have a structure including following general formula (2) at the end of molecular chain, to go under radical polymerization reaction.. Configuration of the allyl ester resin may be a chain structure, a ring structure, or a network structure.

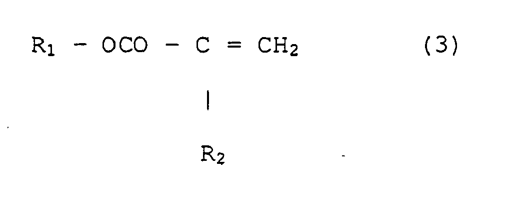

In the aforementioned general formula (3), R₁ indicates a mono-valent organic bonding group, and is not limited so long as the acrylate group can react and cure by heat. R₂ indicates a hydrogen atom or a methyl group. Manufacturing method is also not limited, and any known method can be chosen arbitrarily. For example, a manufacturing method disclosed in Japanese Patent Application (Laid-open) Tokukaihei 7-92674 can be mentioned. In particular, the acrylate resin can be obtained by making epoxy acrylate react with a poly-basic acid or an acid anhydride.

### (1.4) Epoxy Resin

The expoxy resin indicates a material that includes a structure of following general formula (4), and represents a thermosetting resin that is able to go under ring-opening polymerization by radical polymerization and cationic polymerization. Configuration of the epoxy resin may be a chain structure, a ring structure, or a network structure.

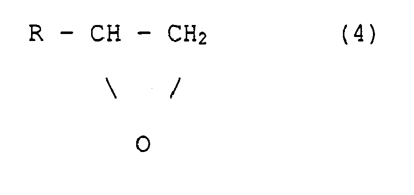

In the aforementioned general formula (4), R₁ indicates a mono-valent organic bonding group, and is not limited so long as the epoxy group can react and cure by heat. Manufacturing method is also not limited, and any known method can be chosen arbitrarily. For example, a manufacturing method disclosed in Japanese Patent Application (Laid-open) Tokukaihei 5-65331 can be mentioned.

### (2) Fine Particles

With respect to the fine particles, any inorganic oxides can be applied so long as its refractive index n2 satisfies the condition of 0 ≤ |n1 - n2| ≤ 0.1, where n1 indicates refractive index of the thermosetting resin. As for the fine particles, calcium carbonate (CaCO₃), calcium sulfate (CaSO₄), calcium silicate (CaSiO₃), potassium carbonate (K₂CO₃), potassium bicarbonate (KHCO₃), potassium perchlorate (KClO₄), sodium nitrate (NaNO₃), sodium metasilicate (NaSiO₃), sodium sulfite (Na₂SO₃), barium sulfate (BaSO₄), barium carbonate (BaCO₃), barium biphosphate (BaHPO₄), strontium carbonate (SrCO₃), silicon oxide (SiO₂), and the like are preferable examples.

It is preferable that mean particle diameter of the fine particles is in the range of 1 - 100nm. In a case where the mean particle diameter is less than 1nm, dispersion of the fine particles becomes difficult, and thus there is a possibility that desired property cannot be obtained. In addition, on the grounds that such fine particles are impossible to manufacture, it is preferable that the mean particle diameter of the fine particles is 1nm or more. On the other hand, in a case where the mean particle diameter exceeds 100nm, transparency decreases due to the obtained optical element becoming cloudy, or the like. Therefore, since there is a possibility that spectral transmittance becomes less than 85%, it is preferable that the mean particle diameter is 100nm or less. Here, mean particle diameter is a mean particle volume of a diameter, which is a diameter of a sphere obtained by converting each of the fine particles into a sphere with the same volume (sphere conversion diameter).

In the aforementioned embodiment, the objective lens OBJ as the optical element according to the present invention is structured with the thermosetting resin which is added with fine particles. Therefore, with respect to the objective lens OBJ, gap between the molecular chains of the resin can be filled with the fine particles, and thus resin structure that has low mobility can be realized. As a result, with respect to the objective lens OBJ, while having heat resistance, aberration variation due to absorption of light energy can also be suppressed (light resistance is improved). Further, with respect to the objective lens OBJ, difference between refractive index of the aforementioned thermosetting resin n1 and refractive index of the aforementioned fine particles n2, |n1 - n2|, satisfies the condition of 0 ≤ |n1 - n2| ≤ 0.1. Therefore, light transmission can also be improved with respect to the objective lens OBJ. As a result, the objective lens OBJ can be made as an optical element that has high quality with respect to heat resistance and light resistance, as well as high quality with respect to light transmission (refer to the following examples).

### [Examples]

### (1) Preparation of Sample

### (1.1) Preparation of Sample 1 (Example)

Poly organosiloxane resin (LPS5500, product of Shin-Etsu Chemical Co., Ltd., refractive index n1 = 1.52) was applied as a thermosetting resin, and SiO2 that has its surface treated with hydrophobic treatment by hexamethyl disilzane (mean particle diameter of 12 nm, refractive index n2 = 1.46) was applied as fine particles, and thus objective lens with thickness of 1 mm was formed. This objective lens was referred to as "sample 1". Concerning the sample 1, amount of silicate included is 20 parts by weight with respect to 100 parts of weight of the thermosetting resin.

### (1.2) Preparation of Sample 2 (Example)

With respect to the preparation of the sample 1, fine particles were altered to Na₂SiO₃ (mean particle diameter of 12 nm, refractive index n2 = 1.52). Objective lens was formed with other procedures being the same as those of the sample 1, and the objective lens was referred to as "sample 2".

### (1.3) Preparation of Sample 3 (Example)

With respect to the preparation of the sample 1, fine particles were altered to BaCO₃ (mean particle diameter of 12 nm, refractive index n2 = 1.60). Objective lens was formed with other procedures being the same as those of the sample 1, and the objective lens was referred to as "sample 3".

### (1.4) Preparation of Sample 4 (Example)

With respect to the preparation of the sample 1, fine particles were altered to CaSO₄ (mean particle diameter of 12 nm, refractive index n2 = 1.63). Objective lens was formed with other procedures being the same as those of the sample 1, and the objective lens was referred to as "sample 4".

### (1.5) Preparation of Sample 5 (Example)

With respect to the preparation of the sample 1, fine particles were altered to Al₂O₃ (mean particle diameter of 12 nm, refractive index n2 = 1.70). Objective lens was formed with other procedures being the same as those of the sample 1, and the objective lens was referred to as "sample 5".

### (1.6) Preparation of Sample 6 (Comparison Example)

With respect to the preparation of the sample 1, fine particles were not added. Objective lens was formed only with thermosetting resin (poly organosiloxane resin alone), with other procedures being the same as those of the sample 1, and the objective lens was referred to as "sample 6". (1.7) Preparation of Sample 7 (Example)

With respect to the preparation of the sample 1, thermosetting resin was altered to allyl ester resin (BA901, product of Showa Denko K. K., refractive index n1 = 1.56). Objective lens was formed with other procedures being the same as those of the sample 1, and the objective lens was referred to as "sample 7".

### (1.8) Preparation of Sample 8 (Example)

With respect to the preparation of the sample 7, fine particles were altered to BaCO₃ (mean particle diameter of 12 nm, refractive index n2 = 1.60). Objective lens was formed with other procedures being the same as those of the sample 7, and the objective lens was referred to as "sample 8".

### (1.9) Preparation of Sample 9 (Example)

With respect to the preparation of the sample 7, fine particles were altered to Al₂O₃ (mean particle diameter of 12 nm, refractive index n2 = 1.70). Objective lens was formed with other procedures being the same as those of the sample 7, and the objective lens was referred to as "sample 9".

### (1.10) Preparation of Sample 10 (Comparison Example)

With respect to the preparation of the sample 1, fine particles were not added. Objective lens was formed only with thermosetting resin (allyl ester resin alone), with other procedures being the same as those of the sample 1, and the objective lens was referred to as "sample 10". (1.11) Preparation of Sample 11 (Example)

With respect to the preparation of the sample 1, thermosetting resin was altered to epoxy resin (OX-SQ-H, product of Toagosei Co. Ltd., refractive index n1 = 1.46). Objective lens was formed with other procedures being the same as those of the sample 1, and the objective lens was referred to as "sample 11".

### (1.12) Preparation of Sample 12 (Comparison Example)

With respect to the preparation of the sample 11, fine particles were altered to BaCO₃ (mean particle diameter of 12 nm, refractive index n2 = 1.60). Objective lens was formed with other procedures being the same as those of the sample 11, and the objective lens was referred to as "sample 12".

### (1.13) Preparation of Sample 13 (Comparison Example)

With respect to the preparation of the sample 11, fine particles were altered to Al₂O₃ (mean particle diameter of 12 nm, refractive index n2 = 1.70). Objective lens was formed with other procedures being the same as those of the sample 11, and the objective lens was referred to as "sample 13".

### (1.14) Preparation of Sample 14 (Comparison Example)

With respect to the preparation of the sample 11, fine particles were not added. Objective lens was formed only with thermosetting resin (epoxy resin alone), with other procedures being the same as those of the sample 11, and the objective lens was referred to as "sample 14".

### (1.15) Preparation of Sample 15 (Comparison Example)

With respect to the preparation of the sample 1, thermosetting resin was altered to thermoplastic resin (ACRYPET, product of Mitsubishi Rayon Co., Ltd., refractive index n1 = 1.46). Objective lens was formed with other procedures being the same as those of the sample 1, and the objective lens was referred to as "sample 15".

### (2) Measurement of Properties of Samples 1 - 15

### (2.1) Measurement of Spectral Transmittance

Spectral transmittance for each samples 1 through 15 were measured. Measurement of spectral transmittance was conducted in accordance with the method described in ASTM D 1003, using spectral photometer available from Hitachi, Ltd., in the range of 350 nm to 800 nm. Transmittance (%) of each of the samples 1 through 15, obtained for wavelength of 405 nm, are shown in the following table 1.

Here, it can be used as a pickup lens when the transmittance shown in table 1 is 85 % or more.

### (2.2) Evaluation of Light Resistance

Light resistance test was conducted for each of the samples 1 through 15. Specifically, in the constant-temperature chamber of 85 degrees Celsius and relative humidity of 5% or less, each of the samples 1 through 15 were irradiated with laser light beam with wavelength of 405 nm and peak intensity of 120 mW/mm² for 168 hours. Subsequently, interferometer was measured for samples 1 through 15 independently. Results of measurement are shown in table 1. In Table 1, criteria for the symbols of "A" and "B" are as given below. Here, before irradiation of laser light beam, all of the samples 1 through 15 had interference pattern, and formed excellent wavefront.

A : No change in interference pattern was observed with respect to the interference pattern before irradiation, and excellent wavefront was formed.

B : Interference pattern was not observed after irradiation, and large aberration occurred.

### (2.3) Evaluation of Heat Resistance

Each of the samples 1 through 15 were heated to 85 degrees Celsius. Subsequently, change in form was visually observed, and evaluation was made in accordance with the following criteria.
- A :: No change in form was observed.
- B :: Change in form was observed.

**Table 1**

| sample | thermosetting resin | | fine particles | | | refractive index difference \|n1 - n2\| | spectral transmittance | light resistance | heat resistance (form change at 85 °C) |
|---|---|---|---|---|---|---|---|---|---|
| | type | refractive index n1 | type | refractive index n2 | mean particle diameter | | | | |
| 1 | poly organosiloxane resin (Shin-Etsu Chemical Co., Ltd., LPS5500) | 1.52 | SiO₂ | 1.46 | 12nm | 0.06 | 91 | A | A |
| 2 | | | Na₂SiO₃ | 1.52 | 12nm | 0 | 91 | A | A |
| 3 | | | BaCO₃ | 1.60 | 12nm | 0.08 | 85 | A | A |
| 4 comparison example | | | CaSO₄ | 1.63 | 12nm | 1.1 | 70 | A | A |
| 5 comparison example | | | Al₂O₃ | 1.70 | 12nm | 0.18 | 40 | A | A |
| 6. comparison example | | | none | - | - | 0 | 91 | B | A |
| 7 | allyl ester resin (Showa Denko K. K., BA901) | 1.56 | SiO₂ | 1.46 | 12nm | 0.1 | 72 | A | A |
| 8 | | | BaCO₃ | 1.60 | 12nm | 0.04 | 86 | A | A |
| 9 comparison example | | | Al₂O₃ | 1.70 | 12nm | 0.14 | 45 | A | A |
| 10 comparison example | | | none | - | - | 0 | 86 | B | A |
| 11 | epoxy resin (Toagosei Co. Ltd., OX-SQ-H) | 1.46 | SiO₂ | 1.46 | 12nm | 0 | 89 | A | A |
| 12 comparison example | | | BaCO₃ | 1.60 | 12nm | 0.14 | 44 | A | A |
| 13 comparison example | | | Al₂O₃ | 1.70 | 12nm | 0.24 | 30 | A | A |
| 14 comparison example | | | none | - | - | 0 | 89 | B | A |
| 15 comparison example | PMMA resin (Mitsubishi Rayon Co., Ltd., ACRYPET) | 1.46 | SiO₂ | 1.46 | 12nm | 0 | 90 | A | B |

### (3) Conclusion

As shown in Table 1, when results of samples 1 through 3, ,7 8, and 11 according to the present invention, and results of samples 4 through 6, 9, 10, and 12 through 15 for comparison are compared, samples according to the present invention show superior light resistance and spectral transmittance compared to samples for comparison. As a result, it is understood that when difference between the refractive index of the thermosetting resin n1 and the refractive index of the fine particles n2, |n1 - n2|, satisfies the condition of 0 ≤ |n1 - n2| ≤ 0.1, optical element that has high quality with respect to light resistance as well as high quality with respect to light transmittance can be obtained.

The entire disclosure of Japanese Patent Application No. 2006-022652 filed on January 31, 2006 including ' specification, claims, drawings and abstract are incorporated herein by reference in its entirety.

## Claims

1. An optical element, comprising:
a thermosetting resin; and
fine particles, wherein
difference between refractive index of the thermosetting resin n1 and refractive index of the fine particles n2, |n1 - n2| satisfies a condition of 0 ≤ |n1 - n2| ≤ 0.1.

2. The optical element of claim 1, wherein the difference between the refractive index of the thermosetting resin n1 and the refractive index of the fine particles n2, |n1 - n2| satisfies a condition of |n1 - n2| = 0.

3. The optical element of claim 1 or 2, wherein the fine particles are inorganic oxide.

4. The optical element of claim 1, 2 or 3, wherein mean particle diameter of the fine particles is approximately 1 - 100 nm.

5. The optical element of any one of the preceding claims, wherein the thermosetting resin is a resin selected from a group consisting of silicone resin, allyl ester resin, acrylate resin, and epoxy resin.

6. The optical element of claim 5, wherein the thermosetting resin is silicon resin.

7. The optical element of claim 6, wherein the silicone resin is represented by the following general formula (1),
((R₁) (R₂) SiO₂)ₘ (1)
wherein in the aforementioned general formula (1), R₁ and R₂ indicate the same or different mono-valent hydrocarbon groups, the mono-valent hydrocarbon groups being substituted or non-substituted, and m indicates integer number of 50 or larger.
